# EUROPEAN PATENT APPLICATION

(11) **EP 2 835 280 A1**
(43) Date of publication of application: **11.02.2015**
(21) Application number: 13179631.0
(22) Date of filing: 07.08.2013
(51) Int. Cl.: B60N 2/22, B60N 2/235

(54) **Latch release actuator and method of actuating a seat latch**

(71) Applicant: Schukra Gerätebau GmbH, 2560 Berndorf (AT)
(72) Inventor: Deppe, Ruediger, 85101 Lenting (DE); Samain, Maxime, 90461 Nürnberg (DE); Kiesewetter, Christoph, 91224 Pommelsbrunn (DE); Maierhofer, Gunter, 90587 Veitsbronn (DE)
(74) Representative: Meier, Florian

(57) **Abstract**

A latch release actuator (20) for a seat latch is configured to apply a tension onto a flexible latch release member (13) to release the seat latch. The latch release actuator (20) comprises a pulley (50) mounted to be rotatable about a rotation axis between a rest position and a latch release position. The pulley (50) comprises an attachment portion (91) for attaching the flexible latch release member (13). The latch release actuator (20) comprises a power drive mechanism (59, 61-65) to drive the pulley (50). The latch release actuator (20) comprises a lock mechanism configured to selectively lock the pulley (50) at the latch release position when the pulley (50) reaches the latch release position.

## Description

### FIELD OF THE INVENTION

The invention relates to a latch release actuator. The invention relates in particular to a latch release actuator and method which allow a seat latch to be released to allow a seat component to be displaced.

### BACKGROUND

Latches may be used on vehicle seats or other seats to secure a seat component of the vehicle seat against displacement. When the latch is brought to a released state, the seat component may be displaced between different positions. Exemplary implementations of such latches include latches which secure a backrest of a vehicle seat. When such latches are brought to the released or disengaged state, the backrest may be folded down. Other exemplary implementations of such latches include latches which secure a seat portion of a vehicle seat. When such latches are brought to the released or disengaged state, the seat portion may be pivoted or displaced in translatory manner, for example. Still other exemplary implementations of such latches include latches which secure a head rest of a vehicle seat. When such latches are brought to the released or disengaged state, the head rest may be pivoted or displaced in translatory manner relative to a backrest, for example.

Conventional release mechanisms for seat latches are frequently implemented as manual release mechanisms. Actuation of manual release mechanisms for seat latches may be ergonomically inconvenient, depending on the specific location of the seat latch. Further, if several latches must be released simultaneously to allow a seat component to be displaced, it may be difficult for a user to perform the required release action. Mechanisms which use a rigid coupling member coupled between several seat latches, e.g. a rigid rod which extends between two seat latches for a backrest, may make operation more convenient, but may add to the construction space and weight of the vehicle seat. Still further, if several seat latches must be released to displace several seat components, e.g. several laterally offset backrest sections or several head rests of second or third row vehicle seats, it may be time-consuming and inconvenient for a user to sequentially perform all required latch release operations.

### SUMMARY

There is a continued need in the art for an actuation mechanism for a seat latch which addresses at least some of the above shortcomings. There is in particular a need in the art for an actuation mechanism which increases the comfort provided to a user for bringing a seat latch to a released state, while having good efficiency and providing flexibility as regards the location at which the actuation mechanism may be mounted.

According to embodiments of the invention, a latch release actuator and a method as defined by the independent claims are provided. The dependent claims define further embodiments.

According to an embodiment, a latch release actuator for a seat latch is provided. The latch release actuator is configured to apply a tension onto a flexible latch release member to release the seat latch. The latch release actuator comprises a pulley mounted to be rotatable about a rotation axis between a rest position and a latch release position. The pulley comprises an attachment portion for attaching the flexible latch release member. The latch release actuator comprises a power drive mechanism to drive the pulley. The power drive mechanism comprises a motor and a transmission coupled between the motor and the pulley. The latch release actuator comprises a lock mechanism configured to selectively lock the pulley at the latch release position when the pulley reaches the latch release position.

In the latch release actuator having such a configuration, the lock mechanism provides selective locking of the pulley when the pulley is at the latch release position. It is not required to continue driving the motor to maintain the pulley at the latch release position to ensure that the seat latch is reliably disengaged. This increases efficiency and mitigates the risk that power transmission and control (PTC) needs to be activated too early. A small and/or light-weight motor may be used in the actuator because of the increased efficiency provided by the actuator configuration. With the lock mechanism providing selective locking of the pulley, it is possible to use a non-self-locking transmission coupled between the motor and the pulley, which reduces friction and wear. This also allows a small and/or light-weight motor to be used in the actuator. The flexible latch release member coupled between the latch release actuator and the seat latch allows the latch release actuator to be stored at a location which is spaced from the latch which is being actuated. The latch may be located fully outside of a housing of the latch release actuator, with the flexible latch release member extending between a housing of the latch release actuator and the seat latch. This allows the latch release actuator to be installed at a portion of a vehicle seat at which construction space is more readily available than in other areas.

The flexible latch release member may comprise a cable or a wire. The cable or wire may be guided in a conduit.

The pulley is configured to pull in the flexible latch release member by at least a pre-determined distance which ensures release of the seat latch when the pulley is rotated from the rest position to the latch release position.

The latch release position is a position of the pulley in which, when the latch release actuator is installed in a seat, the associated seat latch is in its released state.

The transmission may be a non-self-locking transmission.

The lock mechanism may be configured to selectively lock the pulley at the latch release position and the rest position, but not at other positions of the pulley.

The lock mechanism may comprise a stop mechanism configured to stop rotation of the pulley at the latch release position.

The lock mechanism may comprise a bias mechanism configured to bias the pulley towards the latch release position and away from the rest position in a first range of positions of the pulley.

The bias mechanism may be configured to bias the pulley towards the rest position and away from the latch release position in a second range of positions of the pulley.

The bias mechanism may comprise a passage configured to guide the flexible latch release member therethrough. The passage may be formed in a housing of the latch release actuator.

When the pulley is in the rest position, the attachment portion of the pulley may be located on a first side of a plane passing through the passage and the rotation axis. When the pulley is in the latch release position, the attachment portion of the pulley may be located on a second side of the plane which is opposite to the first side.

The bias mechanism may comprise an energy storage mechanism coupled to the pulley and configured to supply energy to the pulley when the pulley is displaced to the latch release position from an intermediate position located between the rest position and the latch release position. The energy storage mechanism may comprise a resilient energy storage member, e.g. a spring.

The stop mechanism may be configured to gradually decrease a rotation speed of the pulley when the pulley approaches the latch release position and when the pulley approaches the rest position. The stop mechanism may include at least one soft end stop to decrease end stop noise when the pulley approaches the latch release position and/or the rest position.

The transmission may comprise a worm transmission and at least one further speed reduction stage coupled between the worm transmission and the pulley.

The pulley comprises may have a toothed section.

The at least one further speed reduction stage may comprise a first gear attached to a worm gear of the worm transmission in a torque proof manner, a second gear in meshing engagement with the first gear, and a third gear attached to the second gear in a torque proof manner. The third gear may be in meshing engagement with the toothed section of the pulley.

The worm gear and the first gear may be integrally formed. The third gear and the second gear may be integrally formed.

The first gear, the second gear, and/or the third gear may respectively be configured as a spur gear. The first gear, the second gear, and/or the third gear may respectively have other configurations. For illustration, the gear, the second gear, and/or the third gear may respectively be configured as a bevel gear.

The latch release actuator may further comprise a control unit configured to control the motor to drive the pulley from the rest position to the latch release position and to stop the motor when the pulley reaches the rest position. The control unit may be configured to detect when the pulley reaches the latch release position. Various techniques may be used for detecting that the pulley reaches the latch release position. The control unit may be configured to monitor a motor current, and/or to monitor an output signal of a position sensor, and/or to monitor a ripple on a power supply to count a number of rotations via the ripple induced by a commutator of the motor, and/or to monitor a time interval which elapsed since the motor has been activated and compare the time interval to a threshold, in order to detect when the pulley reaches the latch release position.

The control unit may be configured to stop the motor for a pre-defined time period when the pulley reaches the latch release position, with the lock mechanism locking the pulley at the latch release position while an output shaft of the motor does not rotate.

The control unit may be configured to control the motor to drive back the pulley from the latch release position to the rest position.

The control unit may be configured to control the motor such that an output shaft of the motor rotates in a first direction when the pulley is driven to the latch release position and in an opposite second direction when the pulley is driven back to the rest position.

The control unit may be configured to receive a signal indicating actuation of a button or switch and, in response to receiving the signal indicating actuation of the button or switch, may control the motor to drive the pulley from the rest position to the latch release position, to stop the motor when the pulley reaches the rest position, and control the motor to drive back the pulley from the latch release position to the rest position.

The control unit may be configured to simultaneously control at least two latch release actuators in the manner described above to simultaneously bring at least two seat latches to a released state. The control unit may be configured to simultaneously control more than two latch release actuators in the manner described above to simultaneously bring more than two seat latches to a released state.

The latch release actuator may comprise a flexible latch release member attached to the attachment portion of the pulley.

The flexible latch release member may have a coupling portion configured to be coupled to the vehicle seat latch.

The latch release actuator may be coupled to at least two flexible latch release members to simultaneously bring at least two seat latches to the released state. A cable splitter may be coupled between the latch release actuator and the at least two seat latches to couple the latch release actuator to the at least two seat latches.

According to another embodiment, a vehicle seat is provided. The vehicle seat comprises a seat component. The vehicle seat comprises a seat latch coupled to the seat component. The seat latch is releasable to allow the seat component to be displaced. The vehicle seat comprises a flexible latch release member coupled to the seat latch. The vehicle seat comprises the latch release actuator of an embodiment. The flexible latch release member is attached to the attachment portion of the pulley.

The vehicle seat may comprise a further seat latch to which a further flexible latch release member is coupled. The further flexible latch release member may be coupled to the pulley of the latch release actuator.

The seat latch and, if provided, the further seat latch may be biased to a locked state and may be configured to be releasable by action of the associated flexible latch release member.

The seat component may be a backrest. The latch release actuator may be configured to release the seat latch to allow folding down the backrest.

The latch release actuator may be mounted on the backrest.

The seat component may be a seat portion of the vehicle seat. The latch release actuator may be configured to release the seat latch to allow folding up the seat portion and/or displacing at least the seat portion in a translatory manner.

The latch release actuator may be mounted on the seat portion.

The seat component may be a head rest. The latch release actuator may be configured to release the seat latch to allow a pivoting and/or translatory movement of the head rest.

According to an embodiment, a method of actuating a seat latch using a latch release actuator is provided. The latch release actuator comprises a pulley mounted to be rotatable about a rotation axis between a rest position and a latch release position, a power drive mechanism configured to drive the pulley and comprising a motor, and a lock mechanism configured to selectively lock the pulley at the latch release position when the pulley is at the latch release position. A flexible latch release member is coupled to the seat latch and the latch release actuator. The motor is controlled to drive the pulley from the rest position to the latch release position to release the seat latch. The motor is stopped in response to the pulley reaching the latch release position. The motor is controlled to drive the pulley from the latch release position to the rest position.

Additional features of the method according to embodiments may correspond to the additional features of the latch release actuator and vehicle seat according to embodiments.

The method may be performed by the latch release actuator or vehicle seat according to embodiments.

The latch release actuator, the vehicle seat, and the method according to embodiments allow the seat latch to be released using a power drive. The latch release actuator does not need to be mounted at the seat latch, but may be installed so as to be spaced from the seat latch. The lock mechanism provides selective locking at the latch release position, allowing the pulley to stay in the latch release position even when the motor is stopped. It is not required to continue driving the motor to keep the seat latch in the released state. Similarly, it is not required to use a self-locking transmission. This allows the transmission to be implemented with low friction, thereby reducing wear and/or reducing the need to over-engineer the gears of the transmission and the motor.

The devices and methods according to various embodiments may be utilized for releasing a backrest or a seat portion of a vehicle seat. The devices and methods according to the various embodiments may be utilized for releasing a backrest so as to allow the backrest to fold down, and/or for releasing a head rest so as to allow the head rest to fold down, and/or for releasing a seating portion so as to allow the seating portion to be tilted or otherwise displaced. The devices and methods according to the various embodiments may be utilized for releasing a combination of a first seat component and a second seat component, e.g. a backrest and a head rest, with a predefined timing. The backrest and head rest may be released simultaneously or with a predefined time interval between the release actions, the time interval being defined by the rate at which the pulley is rotated and the actuation paths required for the various seat latches. The devices and methods may in particular be used in association with a vehicle seat, in particular an automotive vehicle seat, without being limited thereto.

### BRIEF DESCRIPTION OF THE DRAWINGS

Additional features and advantages of the invention will become more readily appreciated from the following detailed description of preferred or advantageous embodiments with reference to the accompanying drawings, wherein:
Fig. 1 is a rear view of a vehicle seat according to an embodiment.
Fig. 2 is a view showing components of a vehicle seat according to an embodiment.
Fig. 3 illustrates movements of seat components of a vehicle seat according to an embodiment.
Fig. 4 illustrates movements of seat components of a vehicle seat according to an embodiment.
Fig. 5 is a diagram illustrating a latch release actuator according to an embodiment, with the pulley being in a rest position.
Fig. 6 is a diagram of the latch release actuator of Fig. 5, with the pulley being in a latch release position.
Fig. 7 is a diagram illustrating operation of the latch release actuator of Fig. 5.
Fig. 8 is a diagram illustrating a latch release actuator according to another embodiment.
Fig. 9 is a plan view of a latch release actuator according to an embodiment with a housing shell removed.
Fig. 10 is a partial exploded perspective view of the latch release actuator of Fig. 9.
Fig. 11 is a perspective view of the latch release actuator of Fig. 9.
Fig. 12 is a perspective view of a housing shell of the latch release actuator of Fig. 9.
Fig. 13 is a perspective view of the latch release actuator of Fig. 9, with the pulley being in a rest position.
Fig. 14 is a perspective view of the latch release actuator of Fig. 9, with the pulley being in a latch release position.
Fig. 15 is a partial view illustrating an attachment structure for attaching a flexible latch release member and a pulley of a latch release actuator according to another embodiment.
Fig. 16 is a perspective view of a latch release actuator according to an embodiment which comprises the attachment structure of Fig. 15.
Fig. 17 is a cross-sectional view of a cable splitter of a latch release actuator according to an embodiment.
Fig. 18 is a diagram illustrating a vehicle seat according to an embodiment.
Fig. 19 is a flow chart of a method according to an embodiment.

### DETAILED DESCRIPTION OF EMBODIMENTS

Exemplary embodiments of the invention will be described with reference to the drawings. While some embodiments will be described in the context of specific fields of application, such as in the context of automotive vehicle seating, the embodiments are not limited to this field of application. The features of the various embodiments may be combined with each other unless specifically noted otherwise.

In the drawings, elements or features which have the same or similar construction and/or operation are designated with the same reference numerals.

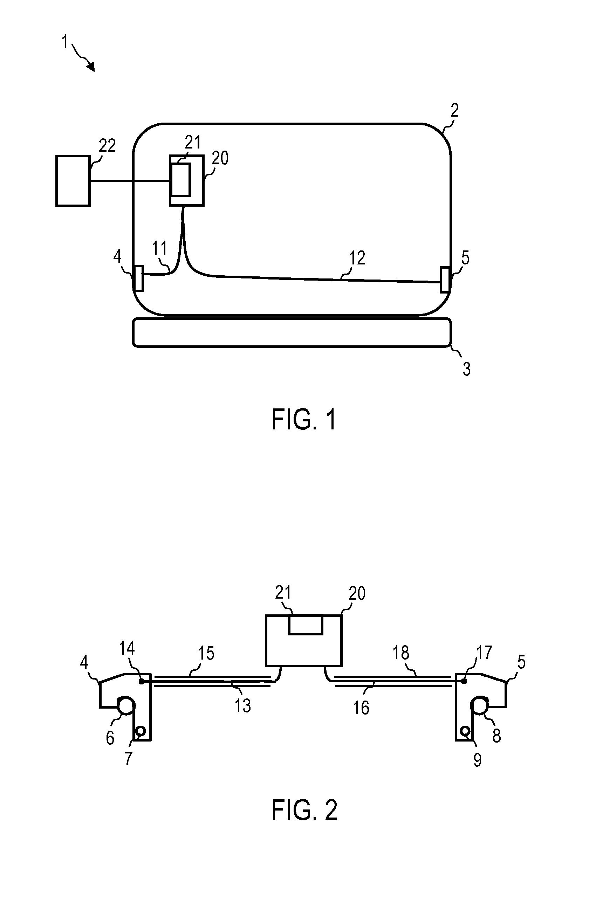

Fig. 1 is a rear view of a vehicle seat 1 according to an embodiment. The vehicle seat 1 has a backrest 2 and a seat portion 3. At least one seat latch is provided to secure a seat component against displacement. The at least one seat latch is selectively releasable to allow the seat component to be displaced. The vehicle seat 1 may comprise one seat latch or several seat latches 4, 5 which secure the backrest 2 against a pivoting movement. Releasing the seat latches 4, 5 allows the backrest to be folded down. The backrest 2 may be folded down or may be tilted otherwise when the seat latches 4, 5 are in the released state. Alternatively or additionally, the vehicle seat 1 may comprise one seat latch or several seat latches which secure the seat portion 3 against a pivoting or translatory movement, and which may be selectively released to allow the seat portion 3 to be pivoted or displaced in a translatory fashion.

The term "seat latch" as used herein generally refers to a latch mounted in association with at least one component of a seat. The seat latch may be provided on or may be selectively engageable with a seat portion, a backrest, or a head rest of the seat.

The vehicle seat 1 comprises a latch release actuator 20. As will be explained in more detail with reference to Fig. 2 to Fig. 19, the latch release actuator 20 is coupled to at least one seat latch 4, 5 via a flexible latch release member 11, 12. The flexible latch release member may comprise a cable or a wire. At least a portion of the cable or wire may be guided in a conduit. The conduit may be formed from a plastic material or from another resilient material. The latch release actuator 20 may be coupled to at least two seat latches 4, 5, respectively via a flexible latch release member.

The latch release actuator 20 may be mounted on the vehicle seat 1. The latch release actuator 20 may be mounted on the backrest 2, for example, or on the seat portion 3. The latch release actuator 20 and the at least one seat latch which is configured to be actuated by the latch release actuator 20 may be mounted on a seat component which is displaceable when the at least one seat latch is brought to its released state.

As will be explained in more detail with reference to Fig. 2 to Fig. 19, the latch release actuator 20 comprises a pulley to which the flexible latch release member is attached. The pulley is operative to apply tension to the flexible latch release member to bring a seat latch to a released state. The latch release actuator 20 has a lock mechanism which selectively locks that pulley at a latch release position at which the flexible latch release member is pulled in by a distance which ensures that the seat latch is in the released state. This allows a motor of the latch release actuator 20 to be stopped while the seat latch remains in its released state, without requiring a self-locking transmission to be used in the latch release actuator 20.

A power drive of the latch release actuator 20 may be controlled in response to a control signal provided to the latch release actuator 20. For illustration, a control unit 21 of the latch release actuator 20 may start a control sequence to release the seat latch in response to receiving the control signal. The control signal may be indicative of an actuation of an actuation element 22. The actuation element 22 may be a button, switch, or other input interface which allows a user to initiate a release of the seat latch, in order to allow a seat component to be displaced.

The power drive of the latch release actuator 20 may be controlled such that a motor drives the pulley from a rest position to the latch release position in response to receiving the control signal. The motor may be stopped when the pulley reaches the latch release position. The lock mechanism retains the pulley at the latch release position. The motor may be controlled to drive the pulley from the latch release position back to the rest position, e.g. after a pre-determined waiting period.

The latch release actuator may comprise a sensor to detect when the pulley reaches the latch release position. For illustration, a position sensor may be used. Alternatively or additionally, a motor current may be monitored to detect when the latch release position has been reached. Alternatively or additionally, a ripple on a power supply may be monitored to detect a number of rotations of an output shaft of the motor. Alternatively or additionally, a time interval which elapsed since the motor was started may be monitored and compared to a threshold, in order to detect when the pulley reaches the latch release position. The respective monitoring operations may be performed by a control unit of a latch release actuator according to an embodiment.

Fig. 2 is schematic diagram illustrating an assembly of a latch release actuator 20 coupled to a seat latch 4. The latch release actuator 20 is coupled to the seat latch 4 via a flexible latch release member 13. The flexible latch release member 13 may be a cable, wire or other traction element. An end of the flexible latch release member 13 may be coupled to the seat latch 4 by a coupling portion 14. At least a portion of the flexible latch release member 13 may extend through a conduit 15. When the latch release actuator 20 applies a tension onto the flexible latch release member 13 and pulls in a portion of the flexible latch release member 13, the seat latch 4 may be brought to a released state. The released state may take any one of a variety of configurations. For illustration, the seat latch 4 may be disengaged from a mating engagement member 6. The seat latch 4 may be pivoted about a pivot 7 or may be displaced in a translatory fashion under the control of the latch release actuator 20 to bring the seat latch 4 into the released state which allows a seat component of the vehicle seat to be displaced.

The latch release actuator 20 may be coupled to at least one further seat latch 5 via a further flexible latch release member 16. The further flexible latch release member 16 may be a cable, wire or other traction element. An end of the further flexible latch release member 16 may be coupled to the further seat latch 5 by a coupling portion 17. At least a portion of the further flexible latch release member 16 may extend through a further conduit 18. When the latch release actuator 20 applies a tension onto the further flexible latch release member 16 and pulls in a portion of the further flexible latch release member 16, the further seat latch 5 may be brought to a released state. For illustration, the further seat latch 5 may be disengaged from a further mating engagement member 8. The further seat latch 5 may be pivoted about a further pivot 9 or may be displaced in a translatory fashion under the control of the latch release actuator 20 to bring the further seat latch 5 into the released state which allows a seat component of the vehicle seat to be displaced.

One or several latch release actuators may be provided on a vehicle seat to selectively release seat latches. For illustration, at least one seat latch may be provided for securing a backrest and at least one other seat latch may be provided for securing a seat portion. At least one latch release actuator may be provided for each one of these seat latches. Sections of second or third row seats which are offset in the lateral direction of a vehicle may respectively be provided with associated seat latches, to allow sections of a backrest and/or sections of a seat portion to be made displaceable by actuation of an associated latch release actuator. At least one latch release actuator may be provided for each one of these laterally offset sections of second or third row vehicle seats.

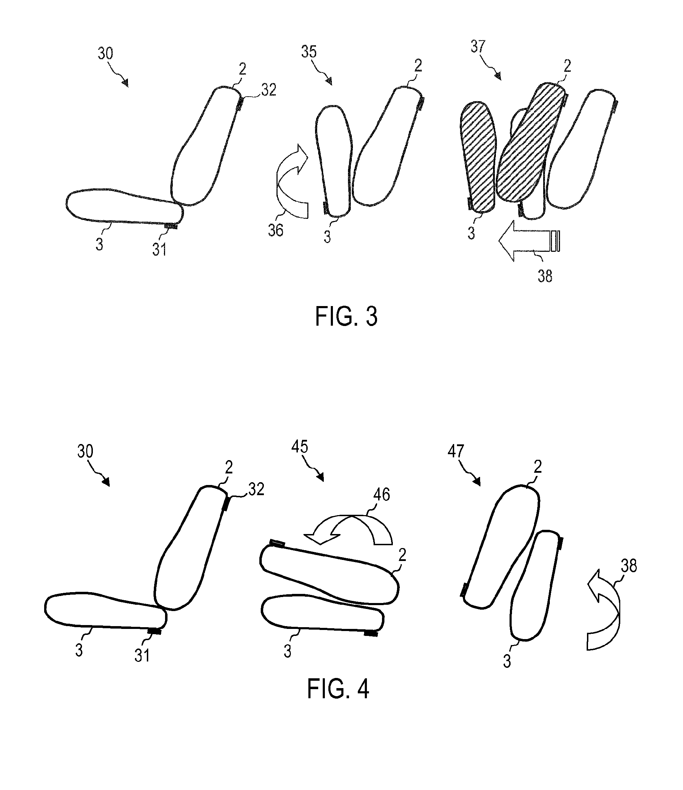

Fig. 3 and Fig. 4 illustrate exemplary movements of seat components of a vehicle seat which includes a latch release actuator according to embodiments. The vehicle seat has at least one first seat latch 31 provided to secure a seat portion 3. The seat portion 3 may be displaced when the at least one first seat latch 31 is brought into the released state. The vehicle seat has at least one second seat latch 32 provided to secure a backrest 2. The backrest 2 may be displaced when the at least one second seat latch 32 is brought into the released state.

Fig. 3 illustrates a movement of seat components starting from a normal configuration 30 of the vehicle seat. Actuation of a first latch release actuator brings the first seat latch 31 to the released state. This allows the seat portion 3 to be tilted upward in a tilting movement 36, bringing the vehicle seat to a configuration 35. Alternatively or additionally, the backrest 2 and the seat portion 3 may undergo a translatory displacement 38 when the first seat latch 31 is in the released state, bringing the seat to a displaced configuration 37 (shown in hatched style) which provides increased storage space or leg space at the rear side of the seat.

Fig. 4 illustrates another movement of seat components starting from a normal configuration 30 of the vehicle seat. Actuation of a second latch release actuator brings the second seat latch 32 to the released state. This allows the backrest 2 to fold down in a tilting movement 46, bringing the vehicle seat to a configuration 45. Actuation of the first latch release actuator brings the first seat latch 31 to the released state. This allows the backrest 2 and seat portion 3 to jointly undergo a tilting movement 48, bringing the seat to a configuration 47 which provides increased storage space or leg space at the rear side of the seat.

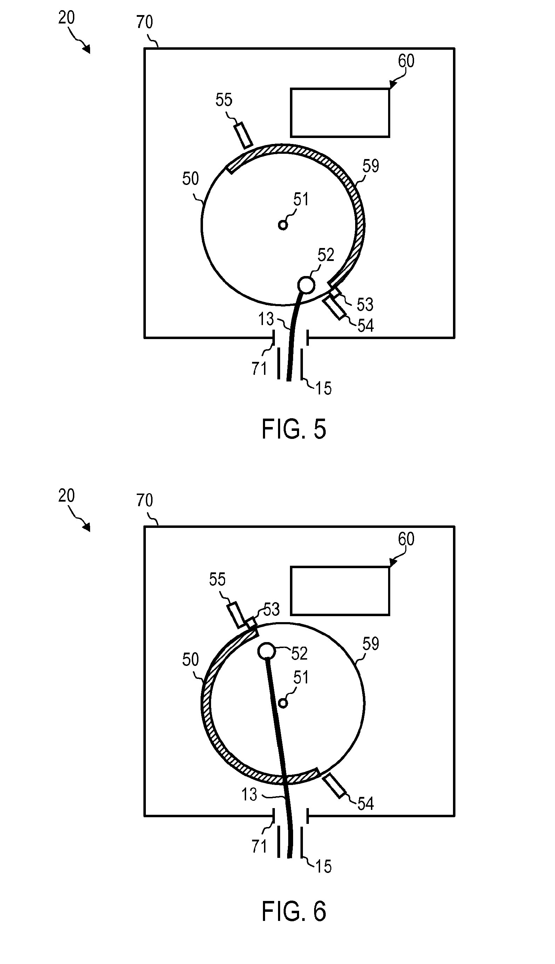

In yet other configurations, the seat component may include a head rest. The latch release actuator may be operative to actuate a seat latch which secures the head rest to allow the head rest to be folded down. The latch release actuator may be operative to actuate the second seat latch 32 to allow the backrest 2 to fold down. Configurations of the latch release actuator according to embodiments will be described in more detail with reference to Fig. 5 to Fig. 19 in the following.

Fig. 5 and Fig. 6 are schematic plan views of a latch release actuator 20 according to an embodiment. The latch release actuator 20 may be used in the vehicle seat of Fig. 1 to Fig. 4. Fig. 5 shows the latch release actuator 20 in a rest state in which a pulley 50 is located at a rest position. Fig. 6 shows the latch release actuator in a latch release state in which the pulley 50 is located at a latch release position, causing the seat latch to be released.

The latch release actuator 20 generally includes a pulley 50, a power drive mechanism 60, and a lock mechanism which selectively locks the pulley 50 at the latch release position. The pulley 50, the power drive mechanism 60, and the lock mechanism may be housed in a housing 70. The housing 70 has a passage 71 through which a flexible latch release member 13 is guided. The flexible latch release member 13 may be coupled to a seat latch. The latch release actuator 20 is configured to apply a tension onto the flexible latch release member 13, causing the seat latch to be brought into the released state. The seat latch is located outside of the housing 70 in which the pulley 50 is housed.

The pulley 50 is rotatable about a rotation axis 51. The rotation axis 51 may be defined by a shaft which is received in a bushing of the pulley 50. The pulley has an attachment portion 52 for attaching the flexible latch release member 51. The attachment portion 52 may have any one of a variety of different configurations. For illustration, the attachment portion 52 may define a recess or other female coupling portion in which a projection or other male coupling portion of the flexible latch release member 13 is received. The attachment portion 52 may define a projection or other male coupling portion to which a female attachment member on an end of the flexible latch release member 13 is attached.

The pulley 50 is rotatable between a rest position illustrated in Fig. 5 and a latch release position illustrated in Fig. 6. The attachment portion 52 travels around the rotation axis 51 as the pulley 50 rotates. The rest position and/or the latch release position of the pulley may be defined by a stop mechanism which is configured to stop rotation of the pulley 50. The stop mechanism may comprise an end stop 55 configured to engage a mating stop feature 53 of the pulley 50. The end stop 55 may stop rotation of the pulley in the latch release position when the stop feature 53 of the pulley engages the end stop 55.

The stop mechanism may comprise a further end stop 54 configured to engage the mating stop feature 53 of the pulley 50. The further end stop 54 may stop rotation of the pulley in the latch release position when the stop feature 53 of the pulley engages the further end stop 54.

The end stop 55 and/or the further end stop 54 may respectively be configured as a soft end stop which gradually decreases a rotation speed of the pulley 50 as the pulley 50 approaches the latch release position and/or the rest position. End stop noise may thereby be reduced. Other configurations of the stop mechanism may be used. For illustration, the pulley 50 may be provided with at least one end stop feature for engagement with the end stop 55 when the pulley is at the latch release position, and with at least one additional mating end stop feature for engagement with the further end stop 54 when the pulley is at the rest position.

The latch release actuator comprises a drive mechanism 60. The drive mechanism 60 includes a motor. The drive mechanism 60 includes a transmission coupled between the motor and the pulley. The transmission may comprise at least one speed reduction gearing. The transmission may comprise a worm gearing and at least one spur gearing for speed reduction. The pulley 50 may have a toothed section 59. A gear of the transmission may engage the toothed section 59 formed on the pulley 50.

The latch release actuator 20 has a lock mechanism which selectively locks the pulley 50 at the latch release position when the pulley 50 reaches the latch release position. In this state, the motor of the power drive 60 may be switched off until the pulley is to be returned to its rest position. In the latch release actuator 20 of Fig. 5 and Fig. 6, the lock mechanism is formed by the stop mechanism in combination with the geometrical arrangement of a passage 71 through which the flexible latch release member 13 is guided, which ensures that the pulley 50 is biased towards the latch release position in at least an interval of positions as the pulley 50 approaches the latch release position. The latch release actuator 20 is configured such that the attachment portion 52 formed on the pulley to which the flexible latch release member 13 is anchored is moved from one side of the rotation axis 51 to the other side of the rotation axis 51 as the pulley 50 is rotated from the rest position to the latch release position. The passage 71 for the flexible latch release member 13, the rotation axis 51, the stop mechanism and the position of the attachment portion 52 on the pulley 50 are set such that the attachment portion 52 is located on one side of a plane defined by the passage 71 and the rotation axis 51 when the pulley 50 is in its rest position (illustrated in Fig. 5) and that the attachment portion 52 is located on an opposite side of the plane defined by the passage 71 and the rotation axis 51 when the pulley 50 is in its latch release position (illustrated in Fig. 6). This configuration ensures that the flexible latch release member 13 urges the stop feature 53 of the pulley 50 against the end stop 55 which defines the latch release position, when the pulley 50 is at the latch release position.

The bias mechanism which biases the pulley 50 towards the latch release position allows the motor to be stopped in response to the pulley 50 reaching the latch release position. The motor is controlled such that an output shaft is made to rotate with reverse rotation direction to drive the pulley 50 back from the latch release position to the rest position after the pulley 50 has been at the latch release position for a pre-determined time period. A control unit may be configured to control a polarity of a voltage or current supplied to the motor, for example by using an H-bridge, to drive the pulley from the rest position to the latch release position and to subsequently drive the pulley from the latch release position back to the rest position.

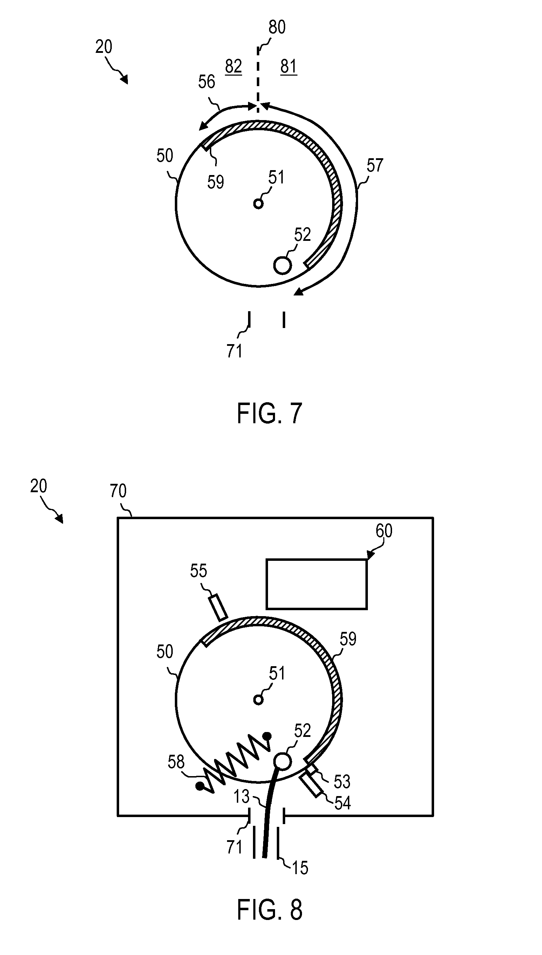

Fig. 7 is a schematic view of the pulley 50 for illustration of the operation of the bias mechanism of the latch release actuator. In a first range of positions of the pulley 50, the attachment portion 52 is located within a sector 56 relative to the rotation axis 51 and the pulley 50 is biased towards the latch release position. When the attachment portion 52 is located at one of the ends of the sector 56, the pulley 50 may be at the latch release position. In a second range of positions of the pulley 50, the attachment portion 52 is located within a sector 57 relative to the rotation axis 51 and the pulley 50 is biased towards the rest position. When the attachment portion 52 is located at one of the ends of the sector 57, the pulley 50 may be at the rest position. This configuration ensures that the motor may be stopped when the pulley 50 is at the latch release position.

Movement of the pulley 50 from the rest position to the latch release position pulls in a section of the flexible latch release member 13, causing the seat latch to become released. At the same time, the bias mechanism keeps the pulley 50 at the latch release position until the pulley 50 is actively driven back to the rest position by the drive mechanism 60.

Fig. 7 also illustrates a plane 80 defined by a center of the passage 71 and the rotation axis 51. When the pulley 50 is in the rest position, the attachment portion 52 is located on a first side 81 of the plane 80. When the pulley 50 is in the latch release position, the attachment portion 52 is located on a second side 82 of the plane 80, opposite to the first side 81. This configuration ensures that the pulley 50 is biased towards the latch release position in a first range of positions, i.e., when the attachment portion 52 is located on the second side 82 of the plane 80.

The bias mechanism which biases the pulley 50 towards the latch release position may comprise alternative or additional elements. For illustration, the bias mechanism may comprise an energy storage mechanism. The energy storage mechanism may be configured such that it stores energy as the pulley 50 is driven from the rest position to an intermediate position. The energy storage mechanism may be configured such that it releases energy to boost movement of the pulley 50 as the pulley 50 is driven from the intermediate position to the latch release position. The energy storage mechanism may comprise at least one spring or other resilient member. In addition to locking the pulley 50 at the latch release position, the energy storage mechanism may also be operative to boost movement of the pulley 50 as the pulley 50 approaches the latch release position, thereby reducing the total required actuation time.

Fig. 8 shows a latch release actuator 20 according to an embodiment. The latch release actuator 20 includes an energy storage mechanism having a resilient member 58. The resilient member 58 may be configured as a spring. The resilient member 58 may be attached to the pulley 50 at a location which is offset from the rotation axis 51. Another end of the resilient member 58 may be attached to the housing 70. When the drive mechanism 60 starts rotating the pulley 50 from the rest position shown in Fig. 8, energy is stored in the resilient member 58 until the length of the resilient member 58 becomes maximum, for example. While the drive mechanism 60 continues to rotate the pulley 50 from the intermediate position to the latch release position, the resilient member 58 also biases the pulley 50 towards the latch release position and boosts movement of the pulley 50.

The drive mechanism and lock mechanism of the latch release actuator may have a variety of different configurations. For illustration, the drive mechanism may comprise one or several speed reduction stages.

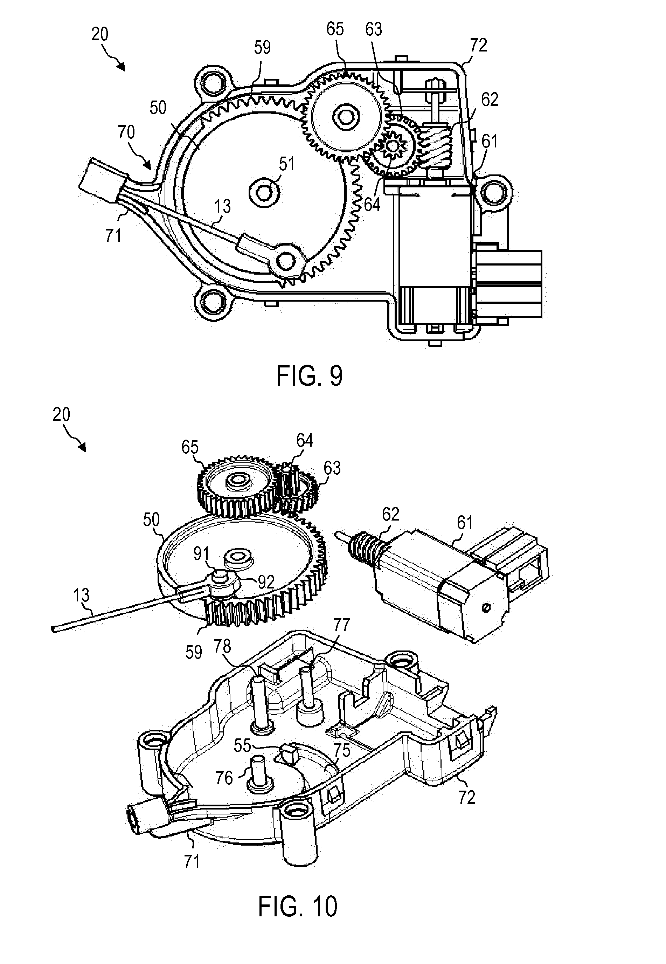

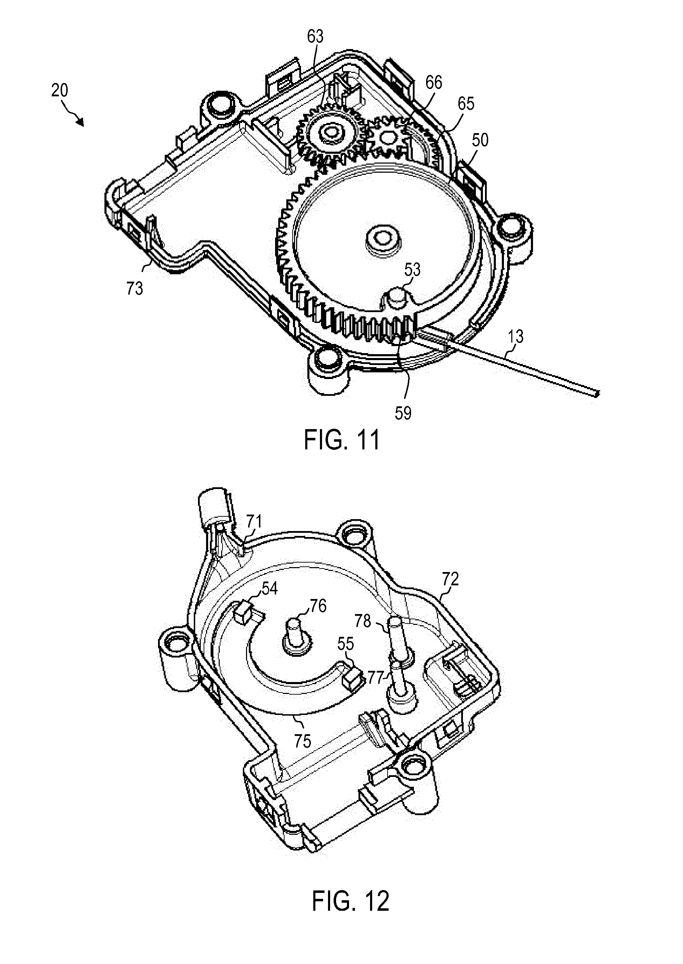

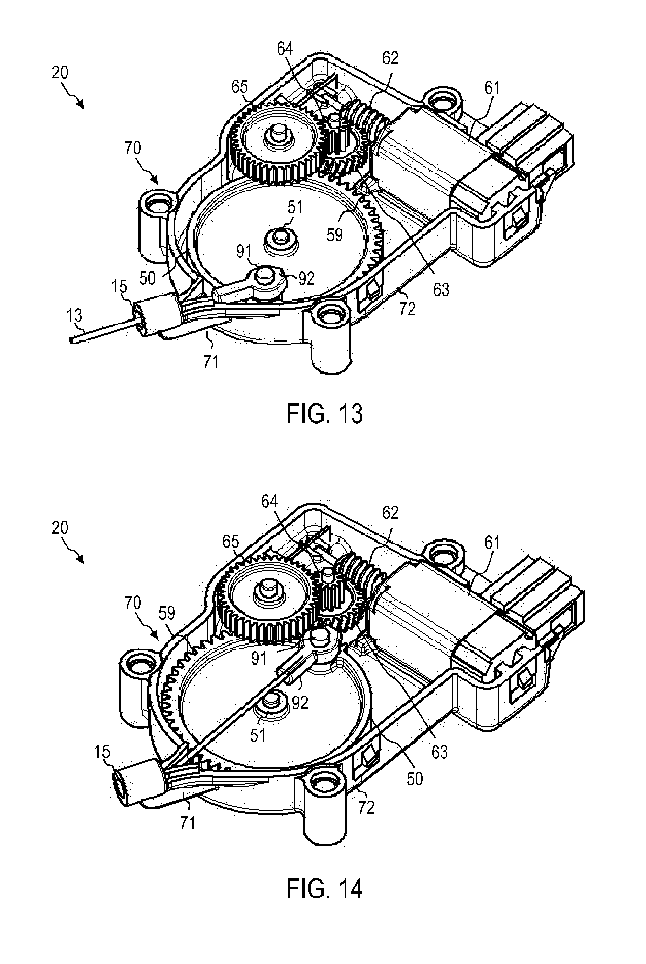

Fig. 9 to Fig. 14 are views of a latch release actuator 20 according to an embodiment. Fig. 9 is a plan view of the assembled latch release actuator 20 with a housing shell removed. Fig. 10 is an exploded view of the latch release actuator 20 with a housing shell removed. Fig. 11 is another perspective view of the latch release actuator 20, with another housing shell removed. Fig. 12 is a perspective view of a housing shell. Fig. 13 is a perspective view of the latch release actuator 20 with a housing shell removed when the latch release actuator is in a rest position. Fig. 14 is a perspective view of the latch release actuator 20 with a housing shell removed when the latch release actuator is in a latch release position. The latch release actuator 20 may be used in the vehicle seats of Fig. 1 to Fig. 4.

The latch release actuator 20 includes a housing 70 having a first housing shell 72 and a second housing shell 73. The housing has a passage 71 through which a flexible latch release member 13 extends into the housing 70. A conduit 13 of the flexible latch release member 13 may be supported on a shoulder of the housing 70.

A pulley 50 is rotatably mounted in the housing. One of the housing shells may have a shaft 76 received in a bushing of the pulley 50 to define the rotation axis 51 of the pulley 50.

The flexible latch release member 13 is attached to the pulley 50. An engagement member 92 may be formed on an end of the flexible latch release member 13. The engagement member 92 may be in mating engagement with an attachment portion 91 provided on the pulley 50. For illustration, the attachment portion 91 may comprise a projection formed on the pulley. The engagement member 92 may define a recess engageable with the attachment portion 91. The coupling between the flexible latch release member 13 and the attachment portion 91 of the pulley 50 may be configured such that the end of the flexible latch release member 13 is allowed to rotate relative to the attachment portion 91 as the pulley 50 rotates about the rotation axis 51.

The power drive mechanism for driving the pulley 50 may be arranged in the housing 70. The power drive mechanism comprises a motor 61 and a transmission. The transmission may comprise one or several speed reduction stages. The transmission may comprise a worm transmission and at least one further speed reduction stage. The worm transmission may comprise a worm 62 attached to an output shaft of the motor 61. The worm 62 is in meshing engagement with a worm gear 63. A first gear 64 is attached to the worm gear 63 in a torque proof manner. The first gear 64 and the worm gear 63 may be integrally formed. The first gear 64 and the worm gear 63 may be mounted to be rotatable about the same rotation axis 77. The rotation axis 77 may be formed by a shaft formed on one of the housing shells.

The first gear 64 may be in meshing engagement with a second sear 65. The first gear 64 may be a first spur gear and the second gear 65 may be a second spur gear. The first gear 64 and the second gear 65 may form a spur gearing configured for speed reduction. A third gear 66 (shown in Fig. 11) may be attached to the second gear 65 in a torque proof manner. The third gear 66 and the second gear 65 may be integrally formed. The third gear 66 and the second gear 65 may be mounted to be rotatable about the same further rotation axis 78. The further rotation axis 78 may be formed by a shaft formed on one of the housing shells. The third gear 66 may be a third spur gear.

The third gear 66 may be in meshing engagement with a toothed section 59 of the pulley 50.

At least one end stop may be defined by at least one of the housing shells. For illustration, as shown in Fig. 12, the first housing shell 72 may comprise an end stop 55 configured to engage a mating stop feature 53 of the pulley 50. The end stop 55 may stop rotation of the pulley in the latch release position when the stop feature 53 of the pulley engages the end stop 55. The first housing shell 72 may comprise a further end stop 54 configured to engage the mating stop feature 53 of the pulley 50. The further end stop 54 may stop rotation of the pulley in the latch release position when the stop feature 53 of the pulley engages the further end stop 54. The end stop 55 and/or the further end stop 54 may respectively be configured as a soft end stop which gradually decreases a rotation speed of the pulley 50 as the pulley approaches the latch release position and/or the rest position. End stop noise may thereby be reduced. The end stop 55 and the further end stop 54 may be formed at a recess 75 defined by the first housing shell 72. The stop feature 53 of the pulley 50 may project into the recess 75. The stop feature 53 may be integrally formed with the attachment portion 91 for attaching the flexible latch release member 13. For illustration, the attachment portion 91 may comprise a pin which projects from the pulley 50 to also form the stop feature 53 which engages the end stop 55 and the further end stop 54.

Fig. 13 shows the latch release actuator 20 when the pulley 50 is in the rest position. Fig. 14 shows the latch release actuator 20 when the pulley 50 is in the latch release position. A control unit may be integrated into the housing 70 or may be provided externally of the housing 70. To release a seat latch, the motor 61 is powered and drives the pulley 50 from the rest position to the latch release position via the transmission. The attachment portion 91 is moved from one side of the plane defined by the passage 71 and the rotation axis 51 to the opposite side of the plane when the pulley is rotated from the rest position to the latch release position. When the pulley reaches the latch release position, the motor 61 may be stopped. The tension of the flexible latch release member 13 in combination with the geometry of the latch release actuator locks the pulley 50 at the latch release position. This allows the motor 61 to be stopped immediately when the pulley 50 reaches the latch release position or even before the pulley 50 reaches the latch release position. After a pre-defined time interval, the pulley 50 may be driven back from the latch release position to the rest position. The motor 61 may be controlled to rotate with a reverse direction of rotation, causing the pulley 50 to move out of the latch release position against the bias provided by the bias mechanism and to return to the rest position.

As explained with reference to Fig. 5 to Fig. 8, alternative or additional components may be used for forming the bias mechanism. For illustration, an energy storage mechanism may be provided which biases the pulley towards the latch release position at least when the pulley 50 is in a range of positions in proximity to the latch release positions.

The first housing shell 71 and the second housing shell 72 may be attached to each other in any one of various ways, e.g. by screws, bolts, rivets, ultrasonic welded seams or laser welded seams. The pulley 50 may be fully enclosed by the housing. The flexible latch release member may extend from the housing of the latch release actuator and may be coupled to the seat latch.

Various modifications and alterations may be implemented in latch release actuators according to further embodiments. For illustration the attachment portion of the pulley 50 may be configured such that it allows the flexible latch release member to be attached to the attachment portion after the first housing shell 71 and the second housing shell 72 have been attached to one another.

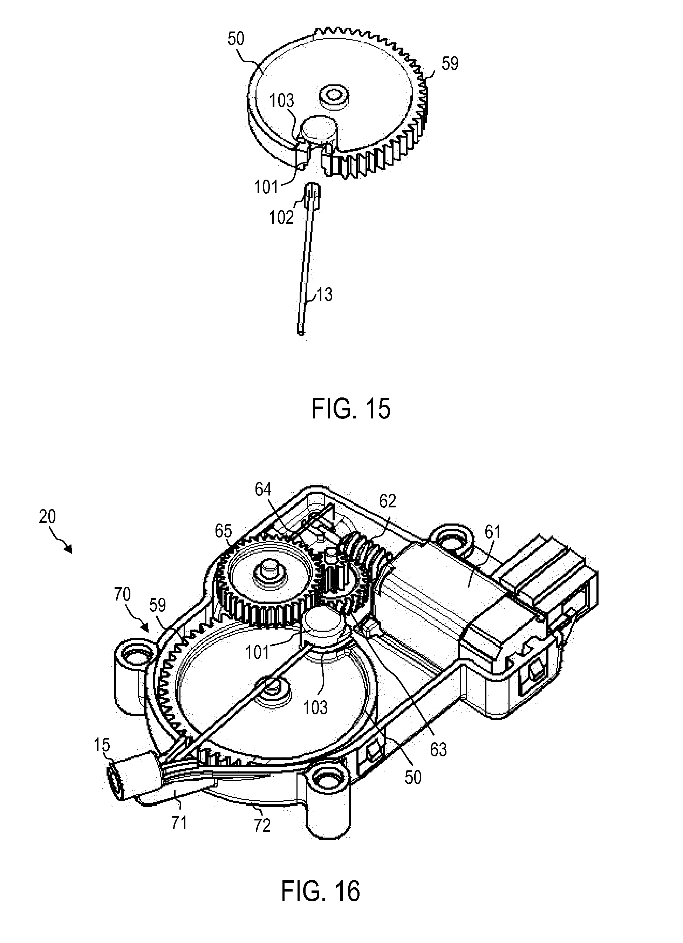

Fig. 15 illustrates a configuration of an attachment structure which may be implemented in a latch release actuator according to an embodiment, and Fig. 16 shows a latch release actuator which includes the attachment structure of Fig. 15.

The pulley 50 is provided with an attachment portion 101 which defines a cavity. The cavity may have a cylindrical portion. A mating attachment member 102 may be provided on an end of the flexible latch release member 13. The attachment member 102 may be sized to be received in the cavity of the attachment portion 101. The attachment member 102 may have a cylindrical shape.

The attachment portion 101 may have a slit 103 formed in a sidewall of the cavity. The slit 103 allows the flexible latch release member 13 to extend therethrough. As the pulley 50 is rotated, the flexible latch release member 13 may travel along the slit 103 in accordance with the movement of the attachment portion 101 relative to the passage 71 formed in the housing.

Several latch release actuators according to embodiments may be provided on one vehicle seat. Alternatively or additionally, a latch release actuator may be configured to simultaneously act upon two flexible latch release members. Two flexible latch release members may be directly attached to the pulley of the latch release actuator in some embodiments. Alternatively or additionally, a cable splitter may be provided to convert the tension applied onto one wire or cable into tension applied to two or more wires or cables.

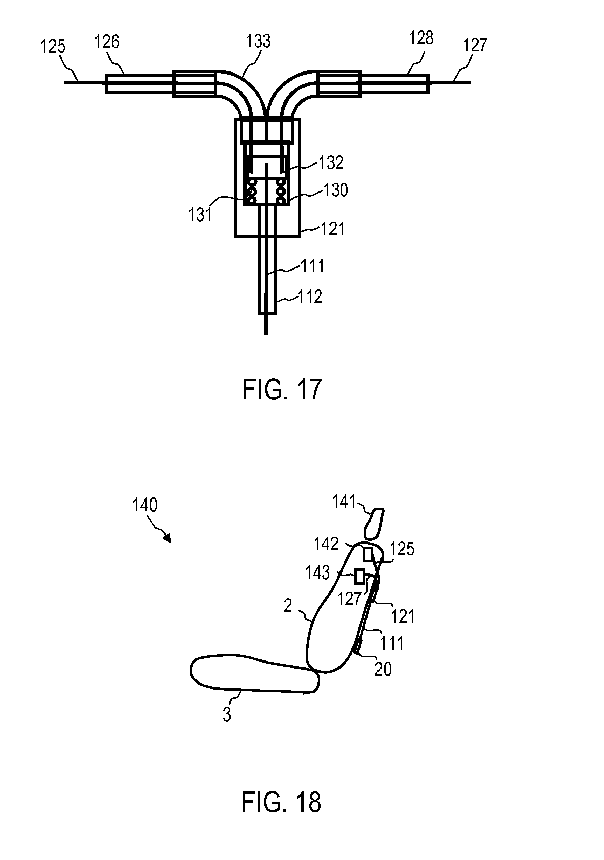

Fig. 17 shows an exemplary implementation of a cable splitter 121 which may be used in a latch release actuator according to an embodiment. The cable splitter 121 includes a cavity 130 formed therein. A block 132 is slideably supported in the cavity 130. The block 132 may be biased by a bias means 131, for example a spring. In other variants, the bias means 131 may be omitted. A traction member 111, e.g. a cable or wire, guided in a conduit 112 and further flexible latch release members 125 and 127 are fixedly secured on the block 132. The conduit 112 may be received in a receptacle formed on the cable splitter 121 and abuts thereon. Additional receptacles are provided for conduits 126 and 128 of the flexible latch release members 125 and 127, respectively. The flexible latch release members 125 and 127 are guided through a guide portion 133 towards the associated conduits 126 and 128, respectively.

In use of the cable splitter 121, the traction member 111 is attached to a pulley of a latch release actuator according to an embodiment. When tension is applied to the traction member 111, the block 132 is displaced against the bias of the bias means 131. The resulting movement of the block 132 applies traction onto the flexible latch release members 125 and 127, respectively. When the traction applied to the traction member 111 is released, the block 132 is displaced by the bias of the bias means 131, thereby releasing the traction applied onto the flexible latch release members 125 and 127.

When the pulley of the latch release actuator is rotated to the latch release position, the flexible latch release members 125 and 127 are both tensioned. This allows two seat latches to be released simultaneously. A cable splitter as schematically illustrated in Fig. 17 may be used for coupling a latch release actuator to a plurality of seat latches.

The flexible latch release members 125 and 127 may be configured such that they release their associated seat latches at the same time. Alternative. the flexible latch release members 125 and 127 and their associated seat latches may be configured such that one of the flexile latch release members releases a first seat latch at a time before the pulley reaches the latch release position, while another one of the flexible latch release members releases a second seat latch at a later time when the pulley reaches the latch release position.

By configuring several flexible latch release members and/or their associated vehicle seat latches in such a way that one of the flexible latch release members has to be drawn in by the pulley by a first length to release its associated first seat latch and that another one of the flexible latch release members has to be drawn in by the pulley by a second length to release its associated second seat latch, a time-sequential actuation of various seat components may be implemented. The second length may be different from the first length. Such techniques may be used, in addition or alternatively to a control unit which controls several actuators, to release several seat latches according to a pre-defined timing. Examples where such techniques may be used include the time-sequential release of a head rest and a backrest of a vehicle seat and/or the time-sequential release of several head rests and/or several backrests which are offset from each other in a lateral direction of a vehicle.

Fig. 18 is a diagram showing a vehicle seat 140 according to an embodiment. The vehicle seat 140 has a head rest 141 which may be supported on the backrest 2. The vehicle seat 140 has a first seat latch 142. Release of the first seat latch 142 may allow the head rest 141 to fold down in a pivoting and/or translatory movement. The vehicle seat 140 has a second seat latch 143. Release of the second seat latch 143 may allow the backrest 2 to fold down.

The vehicle seat 140 comprises a latch release actuator 20. The latch release actuator 20 may have any one of the various configurations explained with reference to Fig. 1 to Fig. 17 above. The vehicle seat 140 comprises a cable splitter 121 which may be coupled to a pulley of the latch release actuator 20 via a traction member 111. The cable splitter 121 may be configured as explained with reference to Fig. 17. The latch release actuator 20 is coupled to the first seat latch 142 via the traction member 111, the cable splitter 121, and a first flexible latch release member 125. The latch release actuator 20 is coupled to the second seat latch 143 via the traction member 111, the cable splitter 121, and a second flexible latch release member 127.

In operation, the latch release actuator 20 may be activated such that the pulley is driven from the rest position to the latch release position. Even before the pulley reaches the latch release position, one of the first seat latch 142 and the second seat latch 143 may be brought to the released state. While the pulley continues to rotate, the other one of the first seat latch 142 and the second seat latch 143 may be brought to the released state. The pulley reaches the latch release position when each one of the seat latches coupled to the actuator has been brought to the released state.

In operation, the latch release actuator 20 may cause one of the first seat latch 142 and the second seat latch 143 to be released earlier than the other one of the first seat latch 142 and the second seat latch 143. Such configurations may be used to cause the head rest 141 to fold down before the backrest 2 is folded down, for example. Alternatively or additionally, such configurations may be used to cause several head rests and/or several backrests to fold down in a time-sequential manner in accordance with a predefined timing.

In addition or alternatively to using a cable splitter 121, several flexible latch release members may also be coupled directly to the pulley of a latch release actuator.

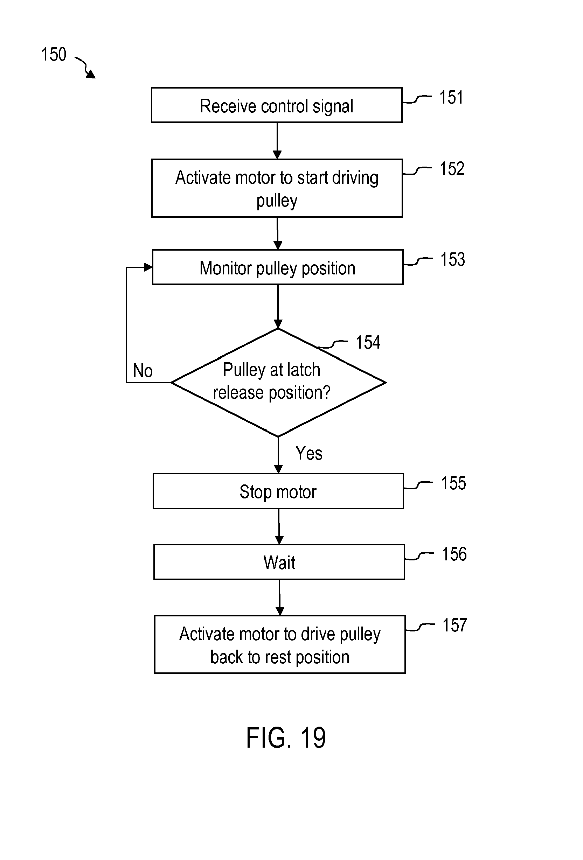

Fig. 19 is a flow chart of a method 150 according to an embodiment. The method 150 may be performed by a control unit of a latch release actuator 20 according to an embodiment. The latch release actuator 20 may have the configuration of any one of the various embodiments described with reference to Fig. 1 to Fig. 18.

At 151, a control signal is received. The control signal may indicate that a button or other actuation element has been actuated by a user to initiate release of at least one seat latch.

At 152, a motor of the latch release actuator is activated to drive a pulley of the latch release actuator from a rest position to a latch release position.

At 153, a position of the pulley is monitored to detect whether the pulley has reached the latch release position. The position of the pulley may be monitored in various ways. An output signal of a position sensor may be monitored to detect whether the pulley has reached the latch release position. The position sensor may comprise a limit switch, for example. Alternatively or additionally, a motor current may be monitored to detect when the latch release position has been reached. Alternatively or additionally, a ripple on a power supply may be monitored to detect a number of rotations of an output shaft of the motor. Alternatively or additionally, a time interval elapsed since actuation of the motor was started may be monitored and compared to a threshold, in order to detect when the pulley reaches the latch release position. The respective monitoring operations may be performed by the control unit of the latch release actuator.

At 154, it is determined whether the pulley has reached the latch release position. If the pulley has not yet reached the latch release position, the monitoring at step 153 may be continued.

If several seat latches are coupled to the latch release actuator, at least one seat latch may be brought into the released state before the pulley reaches the latch release position. Up to all but one seat latch may be brought into the released state before the pulley reaches the latch release position. This allows several seat latches to be released in accordance with a predefined timing.

When the pulley reaches the latch release position, all seat latches coupled to the latch release actuator have been brought to the released state.

At 155, the motor is stopped when the pulley reaches the latch release position.

At 156, the control unit waits for a predefined time period before the motor is activated again. During the time period at 156, the lock mechanism ensures that the pulley remains in the latch release position.

At 157, the control unit activates the motor to drive the pulley from the latch release position back to the rest position.

The steps 151-157 may be repeated.

The latch release actuators according to embodiments may be configured to provide a travel of the flexible latch release member of, for example, between 25 mm and 45 mm. The latch release actuators according to embodiments may be configured to apply pulling forces of between 150 N and 200 N. The latch release actuators according to embodiments may be configured such that the latch drive mechanism drives the pulley from the rest position to the latch release position in less than one second.

While latch release actuators, vehicle seats and methods according to embodiments have been described in detail, modifications and alterations may be implemented in still other embodiments.

For illustration, a transmission comprising a greater or smaller number of reduction stages coupled between the motor and the pulley may be used. Bevel gears or other transmission stages may be used instead of or in addition to a worm gearing and spur gearings.

For further illustration, while the flexible traction member may be attached to the pulley using an attachment structure in which a male part provided on the pulley is engaged with a female part provided on the flexible latch release member, other attachment structures may be used. For illustration, a projection formed on an end of the flexible latch release member may be received in a cavity formed on the pulley.

For further illustration, while implementations of the lock mechanism have been described in detail, other implementations may be used. For illustration, the lock mechanism may comprise a ratchet or other locking engagement feature which selectively locks the pulley at the latch release position.

While exemplary embodiments have been described in the context of seat latches which are released to allow a head rest, a backrest or a seat portion of a vehicle seat to be displaced, embodiments of the invention are not limited to this particular field of application. Rather, embodiments of the invention may be used to release seat latches in a wide variety of seats.

## Claims

1. A latch release actuator for a seat latch (4, 5; 142, 143), the latch release actuator (20) being configured to apply a tension onto a flexible latch release member (11, 12; 13, 16; 111, 125, 127) to release the seat latch (4, 5; 142, 143), the latch release actuator (20) comprising:
a pulley (50) mounted to be rotatable about a rotation axis (51) between a rest position and a latch release position, the pulley (50) comprising an attachment portion (52; 91; 101) for attaching the flexible latch release member (11, 12; 13, 16; 111, 125, 127);
a power drive mechanism (60) configured to drive the pulley (50), the power drive mechanism (60) comprising a motor (61) and a transmission (59, 62-66) coupled between the motor (61) and the pulley (50); and
a lock mechanism configured to selectively lock the pulley (50) at the latch release position when the pulley (50) reaches the latch release position.

2. The latch release actuator of claim 1,
wherein the transmission (59, 62-66) is a non-self-locking transmission (59, 62-66).

3. The latch release actuator of claim 1 or claim 2,
wherein the lock mechanism comprises:
a stop mechanism (53-55) configured to stop rotation of the pulley (50) at the latch release position, and
a bias mechanism (13, 71; 58) configured to bias the pulley (50) towards the latch release position and away from the rest position in a first range of positions (56) of the pulley (50).

4. The latch release actuator of claim 3,
wherein the bias mechanism (13, 71; 58) is configured to bias the pulley (50) towards the rest position and away from the latch release position in a second range of positions (57) of the pulley (50).

5. The latch release actuator of claim 3 or claim 4,
wherein the bias mechanism (13, 71; 58) comprises a passage (71) configured to guide the flexible latch release member (11, 12; 13, 16; 111, 125, 127) therethrough, and
wherein, when the pulley (50) is in the rest position, the attachment portion (52; 91; 101) of the pulley (50) is located on a first side (81) of a plane (80) passing through the passage (71) and the rotation axis (51), and when the pulley (50) is in the latch release position, the attachment portion (52; 91; 101) of the pulley (50) is located on a second side (82) of the plane (80) which is opposite to the first side (81).

6. The latch release actuator of any one of claims 3 to 5,
wherein the bias mechanism (13, 71; 58) comprises an energy storage mechanism (58) coupled to the pulley (50) and configured to supply energy to the pulley (50) when the pulley (50) is displaced to the latch release position from an intermediate position located between the rest position and the latch release position.

7. The latch release actuator of any one of claims 3 to 6,
wherein the stop mechanism (53-55) is configured to gradually decrease a rotation speed of the pulley (50) when the pulley (50) approaches the latch release position and when the pulley (50) approaches the rest position.

8. The latch release actuator of any one of the preceding claims,
wherein the transmission (59, 62-66) comprises a worm transmission (62, 63) and at least one further speed reduction (64-66) stage coupled between the worm transmission (62, 63) and the pulley (50).

9. The latch release actuator of claim 8,
wherein the pulley (50) comprises a toothed section (59), and
wherein the at least one further speed reduction stage (64-66) comprises:
a first gear (64) attached to a worm gear (63) of the worm transmission (62, 63) in a torque proof manner,
a second gear (65) in meshing engagement with the first gear (64), and
a third gear (66) attached to the second gear (65) in a torque proof manner, the third gear (65) being in meshing engagement with the toothed section (59) of the pulley (50).

10. The latch release actuator of any one of the preceding claims, further comprising:
a control unit (21) configured to control the motor (61) to drive the pulley (50) from the rest position to the latch release position, to stop the motor (61) when the pulley (50) reaches the rest position, and to control the motor (61) to drive back the pulley (50) from the latch release position to the rest position.

11. The latch release actuator of any one of the preceding claims, further comprising:
the flexible latch release member (11, 12; 13, 16; 111, 125, 127) attached to the attachment portion (52; 91; 101) of the pulley (50), the flexible latch release member (11, 12; 13, 16; 111, 125, 127) having a coupling portion (14, 17) configured to be coupled to the vehicle seat latch (4, 5; 142, 143).

12. A vehicle seat, comprising:
a seat component (2, 3),
a seat latch (4, 5; 142, 143) coupled to the seat component (2, 3), the seat latch (4, 5; 142, 143) being releasable to allow the seat component (2, 3) to be displaced,
a flexible latch release member (11, 12; 13, 16; 111, 125, 127) coupled to the seat latch (4, 5; 142, 143), and
the latch release actuator (20) of any one of claims 1 to 10, wherein the flexible latch release member (11, 12; 13, 16; 111, 125, 127) is attached to the attachment portion (52; 91; 101) of the pulley (50).

13. The vehicle seat of claim 12,
wherein the seat component is a backrest (3) and the latch release actuator (20) is configured to release the seat latch (4, 5; 143) to allow folding down the backrest (3).

14. A method of actuating a seat latch (4, 5) using a latch release actuator (20), wherein the latch release actuator (20) comprises a pulley (50) mounted to be rotatable about a rotation axis (51) between a rest position and a latch release position, a power drive mechanism (60) configured to drive the pulley (50) and comprising a motor (61), and a lock mechanism configured to selectively lock the pulley (50) at the latch release position when the pulley (50) is at the latch release position, wherein a flexible latch release member (11, 12; 13, 16; 111, 125, 127) is coupled to the seat latch (4, 5) and to the latch release actuator (20), wherein the method comprises:
controlling the motor (61) to drive the pulley (50) from the rest position to the latch release position to release the seat latch (4, 5; 142, 143);
stopping the motor (61) in response to the pulley (50) reaching the latch release position; and
controlling the motor (61) to drive the pulley (50) from the latch release position to the rest position.
